# EUROPÄISCHE PATENTSCHRIFT

(11) **EP 3 570 962 B1**
(45) Veröffentlichungstag und Bekanntmachung des Hinweises auf die Patenterteilung: **08.11.2023**
(21) Anmeldenummer: 18703906.0
(22) Anmeldetag: 18.01.2018
(51) Int. Cl.: B01D 46/52

(54) **UMGEBUNGSLUFTREINIGUNGSVORRICHTUNG UND STRASSENFAHRZEUG MIT UMGEBUNGSLUFTREINIGUNGSVORRICHTUNG**
ENVIRONMENTAL AIR CLEANING DEVICE AND ROAD VEHICLE HAVING ENVIRONMENTAL AIR CLEANING DEVICE
DISPOSITIF D'ÉPURATION D'AIR AMBIANT ET VÉHICULE ROUTIER COMPRENANT UN DISPOSITIF D'ÉPURATION D'AIR AMBIANT

(30) Priorität: 18.01.2017 DE 102017000412; 22.05.2017 DE 102017004864; 19.07.2017 DE 102017006794
(43) Veröffentlichungstag der Anmeldung: 27.11.2019
(73) Patentinhaber: MANN+HUMMEL GmbH, 71636 Ludwigsburg (DE)
(72) Erfinder: KELLER, Dr. Florian, 71640 Ludwigsburg (DE); PELZ, Andreas, 70806 Kornwestheim (DE); KLEIN, Dr. Gunnar-Marcel, 37276 Meinhard (DE); LÖHL, Thomas, 74395 Mundelsheim (DE); MÜLLER, Dr. Thilo, 76189 Karlsruhe (DE); SCHULZ, Christoph, 70569 Stuttgart (DE)
(74) Vertreter: Mann + Hummel Intellectual Property
(86) Internationale Anmeldenummer: PCT/EP2018/051227
(87) Internationale Veröffentlichungsnummer: WO 2018/134315

(56) Entgegenhaltungen:
- EP-A1- 2 263 776
- WO-A1-2010/084385
- WO-A1-2013/023240
- KR-A- 20140 147 553
- KR-A- 20150 116 014
- US-A1- 2016 067 647

## Beschreibung

### Technisches Gebiet

Die Erfindung bezieht sich auf eine Umgebungsluftreinigungsvorrichtung, die insbesondere zur Abscheidung von Stäuben, insbesondere Feinstäuben, und/oder Gasen ausgebildet ist. Ferner bezieht sich die vorliegende Erfindung auf ein Straßenfahrzeug, insbesondere, aber nicht hierauf beschränkt, einen Personenkraftwagen oder einen Lastkraftwagen, insbesondere einen leichten Lastkraftwagen, der eine Umgebungsluftreinigungsvorrichtung aufweist, und auf ein Filterelement für diese.

Aufgrund der fortschreitenden Urbanisierung besteht vor allem in Ballungszentren das Problem, dass die Umgebungsluft durch Industrieabgase, den Straßenverkehr und private Feuerstätten vor allem bei widrigen Wetterlagen (kein Regen, Inversion, geringe Windgeschwindigkeiten, kein Luftaustausch zwischen Höhenschichten) Grenzwerte für Feinstaub und/oder Gase wie Ozon, NOₓ, CO um ein Vielfaches überschritten werden können.

Es ist ein bereits im Stand der Technik dokumentierter Ansatz, die ohnehin existierenden Fahrzeugbestände (beispielsweise in Deutschland im Jahr 2014 etwa 44 Mio., in China mehr als 106 Mio. Stück) als mobile Umgebungsluftreiniger einzusetzen.

### Stand der Technik

In der DE 20 2006 019 335 U1 wird eine Feinstaub-Absaugvorrichtung für ein Fahrzeug beschrieben, die am Unterboden des Fahrzeugs angeordnet ist und zur Filtration des in den Fahrzeuginnenraum einzuleitenden Luftstroms eingesetzt wird. Die Feinstaub-Absaugvorrichtung weist in einem Gehäuse ein Gebläse auf, das einen Luftstrom aus der Umgebung in das Gehäuse einsaugt und einem Filterelement zuleitet. Zur Unterstützung der Zufuhr des Luftmassenstroms in die Feinstaub-Absaugvorrichtung ist an dem Gehäuse ein hervorstehendes Strömungsleitblech angeordnet.

Ferner ist aus der JP H04297341 A1 eine Absaugvorrichtung bekannt, die an einem Lastkraftwagen montiert ist. Dort ist zwischen Fahrerkabine und Kofferaufbau eine Ansaughutze vorgesehen, über die die zu reinigende Luft einer Reinigungsvorrichtung, die längs der Fahrzeuglängsachse in einem unter dem Kofferaufbau liegenden Bereich angeordnet ist, zugeführt wird. Die Reinigungsvorrichtung weist ein Gebläse auf, um unter möglichst vielen Betriebsbedingungen, auch im Stand, eine Durchströmung zu erreichen.

Aus der WO 2004/080740 A1 ist ein Kraftfahrzeug mit einem Außenluftfilter bekannt, der in einem Bereich der Einwirkung der Hinterräder des Fahrzeugs angeordnet ist, so beispielsweise in einer Radhausschale oder als Teil eines hinteren Schmutzfängers. Nachteilig lassen sich in den dort beschriebenen Bauräumen kaum nennenswerte Filterflächen unterbringen, um eine sinnvolle Luftmenge zu filtern.

Ferner sind passiv durchströmte Systeme aus der WO 2005/094969 A1 (Anordnung an der Seitenwand eines Fahrzeugs) und US 2006/0107636 A1 (Anordnung auf dem Dach) bekannt.

Aus DE 20 2005 005 673 U1 ist eine passive Umgebungsluftreinigungsvorrichtung bekannt, die unter einem hinteren Stoßfänger angeordnet ist und deren Filterelement vertikal durchströmt wird, weshalb zumindest einströmseitig eine Hutze vorzusehen ist, was einen unnötigen Druckverlust erzeugt.

Aus der WO 2009/105800 A1 ist eine Umgebungsluftreinigungsvorrichtung bekannt, die entweder auf dem Dach eines Lastkraftwagens oder im Bereich der Fahrzeugfront angeordnet ist, wobei jeweils Fahrzeugteile stromab des Filters im Strömungsweg stehen.

Aus WO 2010/084385 ist eine auf einem Dach eines Straßenfahrzeugs montierbare Umgebungsluftreinigungsvorrichtung mit zumindest einem Filterelement mit einem Filtermedium bekannt. Weitere gattungsgemäße Umgebungsluftreinigungsvorrichtungen sind aus KR 2015 0116014 A und KR 2014 0147553 A bekannt.

Die aus dem Stand der Technik bekannten Lösungen sind nachteilig dauerhaft bzw. unlösbar mit den Fahrzeugen verbunden. Es ist jedoch so, dass o. g. Wetterlagen mit schlechter Luftqualität, insbesondere im Hinblick auf Partikel- und Schadgasbelastung, insbesondere erhöhter Feinstaubbelastung, meist nur über einen begrenzten Zeitraum vorliegen. Es wäre daher wünschenswert, ein Straßenfahrzeug nur wahlweise mit der Umgebungsluftreinigungsvorrichtung ausstatten zu können.

### Offenbarung der Erfindung

Der Erfindung liegt daher die Aufgabe zugrunde, eine Umgebungsluftreinigungsvorrichtung, insbesondere zur Entfernung von Feinstaub aus der Umgebungsluft, anzugeben, die sich dadurch auszeichnet, dass sie sich zur einfachen Montage, insbesondere als Nachrüstlösung, an einer optimal durchströmten Montageposition einer Vielzahl unterschiedlicher Fahrzeugtypen eignet.

Diese Aufgabe wird gelöst durch eine Umgebungsluftreinigungsvorrichtung mit den Merkmalen des Anspruchs 1 und durch ein Straßenfahrzeug mit den Merkmalen des Anspruchs 13.

Weiterbildungen der Erfindung sind jeweils in den abhängigen Ansprüchen angegeben.

Die erfindungsgemäße Umgebungsluftreinigungsvorrichtung für ein Straßenfahrzeug ist insbesondere zur Entfernung von Stäuben, insbesondere Feinstaub, und/oder Gasen aus der Umgebungsluft ausgebildet. Sie weist wenigstens ein Filterelement auf und ist in einem Außenbereich des Straßenfahrzeugs anordenbar. Die Umgebungsluftreinigungsvorrichtung ist zur Montage mittels einer Dachträgervorrichtung ausgebildet; sie weist hierfür eine Montagevorrichtung zur starren Kupplung mit einer fahrzeugseitigen Montageeinrichtung für Dachlasten auf.

Die Erfindung erfasst ausdrücklich beliebige Straßenfahrzeugtypen, die eine Dachmontage erlauben, so insbesondere auch Anhänger, die selbstverständlich auch mit einer Montageeinrichtung für Dachlasten ausgerüstet sein können. Der Begriff "fahrzeugseitige Montageeinrichtung für Dachlasten" ist weit auszulegen; er umfasst neben klassischen mechanischen Befestigungssystemen, wie z. B. Befestigungsschienen und Dachrehling, auch allgemeine Karosseriebereiche, in denen geeignete Befestigungselemente angreifen können.

In einem Montagezustand der Umgebungsluftreinigungsvorrichtung auf dem Dach des Straßenfahrzeugs ist vorteilhaft hinter dieser eine freie Abströmzone vorhanden. "Freie Abströmzone" bedeutet, dass in Durchströmungsrichtung hinter dem Filterelement der Umgebungsluftreinigungsvorrichtung keine die Strömung störenden Einbauten vorliegen dürfen, da die rein passive Durchströmung ansonsten durch den erhöhten Druckverlust nicht mehr gewährleistet sein könnte.

Die Kopplung der Umgebungsluftreinigungsvorrichtung mit dem Straßenfahrzeug erfolgt besonders bevorzugt lösbar.

Eine lösbare Befestigung der Umgebungsluftreinigungsvorrichtung an einer fahrzeugseitigen Montageeinrichtung für Dachlasten hat mehrere Vorteile: Zunächst existiert mit der fahrzeugseitigen Montageeinrichtung für Dachlasten ein mechanisch sehr belastbares Element, ferner ist die Montage/Demontage schnell und einfach und auch für technische Laien problemlos möglich.

Eine solche wahlweise Montierbarkeit/Demontierbarkeit einer Umgebungsluftreinigungsvorrichtung an ein Straßenfahrzeug ist von besonderem Interesse, wenn in Zeiten mit hoher Schadstoffbelastung für Stra-ßenfahrzeuge mit zu hohen Netto-Emissionen Fahrverbote für betroffene Gebiete bestehen. In einem solchen Szenario könnte der Endnutzer durch wahlweises Befestigen der Umgebungsluftreinigungsvorrichtung auf seinem Fahrzeug ein solches Fahrverbot umgehen.

Der Begriff "Filterelement" ist so zu verstehen, dass dieses ein- oder mehrteilig ausgebildet sein kann und insbesondere mehrere Filtereinheiten, insbesondere Filterbälge und/oder Filtertaschen, aufweisen kann. Es können auch mehrere Subfilterelemente vorgesehen sein, die zu einem Filterelement verbunden werden.

Die vorliegende Erfindung ist auch auf Schienenfahrzeuge, etwa Straßenbahn-, U-Bahn- oder S-Bahn-Züge übertragbar. Durch eine Ausrüstung solcher Fahrzeuge, die im öffentlichen Personennahverkehr betrieben werden, mit Umgebungsluftreinigungsvorrichtungen lassen sich aufgrund der in der Regel engen Taktzeiten sowie zentrumsnahen Streckenführungen signifikante Luftmengen aufreinigen. Bauräume auf dem Dach haben solche Schienenfahrzeuge ebenfalls zur Verfügung, da dort häufig bereits Klimatisierungseinrichtungen und/oder fahrtechnische elektrische Einrichtungen angeordnet sind. Aufgrund des Netzbetriebs steht stets genügend elektrischer Strom zur Verfügung, um auch eine aktive Umgebungsluftreinigungsvorrichtung beliebig lange betreiben zu können. Ferner führt der Anbau einer Umgebungsluftreinigungsvorrichtung aufgrund der großen Masse derartiger Schienenfahrzeuge und der im Durchschnitt eher geringen Fahrgeschwindigkeiten nicht zu einem relevanten Anstieg des Energieverbrauchs.

Gemäß einer weiteren Ausführungsform kann die Montagevorrichtung der Umgebungsluftreinigungsvorrichtung zumindest ein formschlüssiges und/oder kraftschlüssiges Befestigungselement, insbesondere ein Klemmelement, beispielsweise verstellbare Klemmbacken oder ähnliches, und/oder zumindest ein magnetisches Befestigungselement und/oder zumindest einen Saugnapf aufweisen. Bevorzugt kann die Montagevorrichtung Schnellverschlüsse zur Anbindung an die fahrzeugseitige Montageeinrichtung für Dachlasten haben, beispielsweise Schnapp- oder Rastverschlüsse oder ähnliche Verschlüsse.

Das magnetische Befestigungselement wird zur Kopplung der erfindungsgemäßen Umgebungsluftreinigungsvorrichtung mit dem Straßenfahrzeug mit einer (ferro-)magnetischen Karosseriekomponente des Straßenfahrzeugs in Wirkverbindung gebracht. Eine magnetische Befestigung ist vorteilhaft besonders schnell möglich; dass auch größere Lasten sicher hierüber befestigt werden können, haben beispielsweise magnetische Skiträger gezeigt. Auch Saugnäpfe ermöglichen eine belastbare und dauerhafte Befestigung.

Das Filterelement kann gemäß einer weiteren bevorzugten Ausführungsform ein gefaltetes Filterelement mit zumindest einem Filterbalg umfassen, wobei insbesondere die Faltenhöhe des Filterbalgs zumindest 100 mm beträgt.

Die Falten des Filterbalgs können insbesondere in Fahrzeuglängsrichtung verlaufen, da hierdurch die Faltentaschen optimal angeströmt werden können. Die Faltenhöhen des Filterelements betragen besonders vorteilhaft über 200 mm; hierüber kann in einem kompakten Bauraum eine vergleichsweise große Filterfläche untergebracht werden. Alternativ kann es sich bei dem Filterelement um ein sogenanntes Kompaktelement handeln. Unter "Kompaktelement" wird ein Filterelement verstanden, das einen Filtermediumkörper aufweist, der aus abwechselnd aufgewickelten Well- und Flachlagen aus Filtermedium besteht, wobei diese untereinander flächig verklebt sind. Die durch die Welllagen gebildeten Strömungskanäle sind wechselseitig stirnseitig verschlossen, etwa durch einen Klebstoffpfropf.

Ferner kann vorgesehen sein, dass es sich bei dem Filterelement um ein Taschenfilterelement handelt, das zumindest drei Filtertaschen, bevorzugt vier oder mehr Filtertaschen, aufweist. Alternativ oder zusätzlich kann auch ein V-Filter-Element eingesetzt werden, das wenigstens drei V-förmige Filtereinheiten aufweist. Solche Filterelementtypen sind im Bereich der Ansaugfilter für Gasturbinen und/oder HVAC-Systeme am Markt in vielen Größenbereichen verfügbar.

Alternativ oder zusätzlich kann es sich bei dem Filterelement um ein Filterelement handeln, das zumindest der Partikelfilterklasse M6 nach DIN EN 779 entspricht.

Des Weiteren kann das Filterelement eine variable Faltenhöhe aufweisen, bevorzugt eine über eine Fahrzeughochachse oder Fahrzeuglängsachse gesehen variable Faltenhöhe. Hierüber kann etwa eine Anpassung der Außenkontur des Filterelements an einen Bauraum der Umgebungsluftreinigungsvorrichtung, insbesondere eines strömungsgünstig geformten Gehäuses, erreicht werden.

Das Filterelement kann alternativ oder zusätzlich mehrere Faltenstabilisierungsmittel aufweisen, die bei einer Ausführungsform mit gefaltetem Filterbalg diesen stützen und in einem lateralen Abstand von nicht mehr als 150 mm zueinander vorliegen. Eine Ausbildung des Filterelements als Faltenfilter wird aufgrund des im Vergleich zu anderen Bauformen geringen Druckverlusts bevorzugt.

Eine solche Abstützung des Filterbalgs durch Faltenstabilisierungsmittel trägt zweierlei Problemen Rechnung: Erstens erfährt das Filterelement aufgrund der Fahrgeschwindigkeit, insbesondere im Dachbereich, einen hohen Staudruck und zweitens ist das Filterelement Nässeeinwirkungen ausgesetzt, dies nicht nur durch Niederschlag, sondern auch durch Einwirkungen beim Reinigen des Fahrzeugs, etwa durch einen Hochdruckreiniger.

Überraschenderweise lassen sich o. g Herausforderungen durch eine Abstützung der Falten des Filterbalgs durch Faltenstabilisierungsmittel in einem Maximalabstand von 150 mm elegant lösen, sodass das Filterelement sowohl eine Anströmung bei Vₘₐₓ (bei direkter Anströmung), z. B. 180 km/h, bevorzugt > 200 km/h, schadenfrei übersteht als auch, dass es externe Reinigungseinwirkungen durch Hochdruckreiniger nicht schädigen können. Ohne wirksame Faltenstabilisierungsmittel droht einem Filterelement mit klassischem Balgaufbau bei derartiger mechanischer Einwirkung ein Paketieren der Falten, d. h. ein Verschluss der Faltenzwischenräume, was zu einem schlagartigen Verlust an Filterfläche führt und somit unmittelbar zu einem korrespondierenden Anstieg des Durchströmungswiderstandes und somit entsprechenden Abfall des Volumenstroms.

Der erfindungsgemäße Bereich des lateralen Abstands der Faltenstabilisierungsmittel von nicht größer als 150 mm kann vorteilhafterweise nach unten hin derart begrenzt sein, dass der Abstand bevorzugt größer ist als 15 mm, bevorzugt größer als 30 mm, da ansonsten ein ungünstiges Verhältnis von durch die Faltenstabilisierungsmittel verdeckten Filterbalgbereichen und frei durchströmbaren Bereichen vorläge.

Vorteilhaft ermöglicht ein Filterelement mit derartigen Faltenstabilisierungsmitteln, dass eine damit ausgestattete Umgebungsluftreinigungsvorrichtung ggf. ohne separaten Spritzwasserschutz (Klappen, Rollläden o. Ä.) betrieben werden kann, da das Filterelement selbst eine so große Stabilität aufweist, dass eine Wasserschlageinwirkung nicht zu einer Beschädigung des Filterelements führt. Die Umgebungsluftreinigungsvorrichtung weist daher eine nur geringe Komplexität auf und kann überraschend kostengünstig bereitgestellt werden.

Es sind verschiedene Faltenstabilisierungsmittel möglich, die diese Funktion erfüllen.

In einer besonderen Ausführungsform kann vorgesehen sein, dass die Faltenstabilisierungsmittel jeweils parallel zueinander, bevorzugt in Faltenquerrichtung, verlaufen. Andere Winkelorientierungen sind selbstverständlich auch möglich, etwa diagonal. Es können auch zwei Gruppen von Faltenstabilisierungsmitteln vorgesehen sein, die jeweils parallel laufen und sich kreuzen. Ein paralleler Verlauf hat den Vorteil, dass sich dieser bei der Filterelementfertigung problemlos durch kontinuierliche Fertigungsprozesse realisieren lässt. Eine Anordnung der Faltenstabilisierungsmittel in Faltenquerrichtung ist zudem besonders vorteilhaft, da hierbei die kleinstmögliche Stützlänge zwischen zwei benachbarten Falten realisiert ist, was zu einer besonders wirksamen Faltenstützung führt.

Gemäß einer weiteren, ebenfalls bevorzugten Ausführungsform ist vorgesehen, dass die Faltenstabilisierungsmittel zumindest auf einer Reinluftseite des Filterelements, bevorzugt zusätzlich auf einer Rohluftseite des Filterelements, vorliegen. Durch eine solche Anordnung zumindest auf der Reinseite wird zuverlässig verhindert, dass die Falten unter den o. g. mechanischen Belastungen kompaktieren. Eine Anordnung zusätzlich auf der Rohseite erhöht die Belastbarkeit weiter, wobei jedoch der größere Beitrag zur Filterelementsteifigkeit durch die reinseitigen Faltenstabilisierungsmittel geliefert wird.

Ferner kann vorgesehen sein, dass das Filtermedium eine Biegeeigensteifigkeit von zumindest 1 Nm², bevorzugt zumindest 2 Nm², aufweist. Gemeint ist hiermit eine intrinsische Biegesteifigkeit des Filtermediums, d. h. in einem unverarbeiteten/ungefalteten Zustand. Dies erhöht die oben beschriebene Belastbarkeit weiter deutlich.

Gemäß einer noch weiteren Ausführungsform können die Faltenstabilisierungsmittel zumindest ein inneres Faltenstabilisierungsmittel umfassen, das in die Faltenzwischenräume zumindest teilweise eingreift, bevorzugt die Faltenzwischenräume ausfüllt. Bei dem inneren Faltenstabilisierungsmittel kann es sich beispielsweise um eine durchlaufende Kleberaupe und/oder einen eingreifenden Stabilisierungskamm handeln. Unter einer "durchlaufenden Kleberaupe" wird vorliegend eine Kleberaupe verstanden, die bereits vor dem Falten auf das flächige Filtermedium aufgebracht wird und somit nach dem Falten komplett von Faltengrund zur Faltenspitze verläuft, d. h. eben durchlaufend ausgebildet ist. Alternativ oder zusätzlich hierzu kann zumindest ein äußeres Faltenstabilisierungsmittel vorgesehen sein, das zumindest mit jeweils benachbarten Faltenspitzen verbunden ist. Das äußere Faltenstabilisierungsmittel kann zumindest eine zumindest mit den Faltenspitzen verbundene Kleberaupe, zumindest einen zumindest mit den Faltenspitzen verbundenen Faden und/oder zumindest ein Stabilisierungsband bzw. -rippe und/oder zumindest ein Stützgitter aufweisen. Die äußeren Faltenstabilisierungsmittel können ferner stoffschlüssig mit den Faltenspitzen verbunden sein, was zu einer optimalen Krafteinleitung von den Faltenspitzen in die äußeren Faltenstabilisierungsmittel beiträgt. Eine derartige stoffschlüssige Verbindung kann beispielsweise durch Verschweißen des äußeren Faltenstabilisierungsmittels mit dem Filterbalg, insbesondere den Faltenspitzen, erfolgen, insbesondere durch Spiegelschweißen. Im Gegensatz zu den inneren Faltenstabilisierungsmitteln handelt es sich bei der Kleberaupe der äußeren Faltenstabilisierungsmittel nicht um eine durchlaufende Kleberaupe, sondern um eine oberflächlich mit den Faltenspitzen verbundene.

Die Kleberaupen der inneren und/oder äußeren Faltenstabilisierungsmittel können eine Breite in einem Bereich von 0,5 mm bis 12 mm, bevorzugt 1 mm bis 8 mm, aufweisen. In einer besonderen Ausführungsform sind die Falten des Filterbalgs "auf Block gefaltet", sodass der Faltenabstand in etwa der doppelten Breite der durchlaufenden Kleberaupen (als innere Faltenstabilisierungsmittel) entspricht. Als Material für die Kleberaupen kommt etwa ein Schmelzkleber in Betracht.

Alternativ oder zusätzlich kann das Filtermedium des Filterelements der Umgebungsluftreinigungsvorrichtung eine oder mehrere Prägelinien aufweisen, die bevorzugt in Faltenquerrichtung verlaufen. Durch derartige Prägelinien wird die Steifigkeit der Falten des Filterbalgs durch eine Erhöhung des Flächenträgheitsmoments zusätzlich erhöht, was zusätzlich dazu beiträgt, ein Kollabieren/Kompaktieren der Falten unter Druckeinwirkung zu verhindern.

Ferner kann vorgesehen sein, dass das Filterelement der Umgebungsluftreinigungsvorrichtung eine Kollapsdruckfestigkeit von zumindest 15 mbar, bevorzugt zumindest 25 mbar, aufweist.

Es ist gemäß einer weiteren Ausführungsform möglich, dass die Umgebungsluftreinigungsvorrichtung zumindest ein Aufnahmegehäuse aufweist, in dem das zumindest eine Filterelement aufgenommen ist, das zumindest eine Eintrittsöffnung und eine Austrittsöffnung aufweist und das mittels der Montagevorrichtung mit der fahrzeugseitigen Montageeinrichtung für Dachlasten des Straßenfahrzeugs verbindbar ist. Die Eintrittsöffnung(en) kann in bestimmungsgemäßer Fahrtrichtung vorne und/oder seitlich, oben oder unten am Aufnahmegehäuse vorgesehen sein. Bei einer seitlichen Anordnung an einer oberen, unteren oder seitlichen Wand ist eine Anordnung der Eintrittsöffnung(en) im in Fahrtrichtung gesehen vorderen Bereich dieser Wandungen bevorzugt, um die Strömung mit geringem konstruktiven Aufwand innerhalb der Umgebungsluftreinigungsvorrichtung führen zu können. Ferner ist es möglich und sinnvoll, wenn die Umgebungsluftreinigungsvorrichtung zumindest zwei Filterelemente aufweist, die in Fahrzeugquerrichtung oder Fahrzeughochrichtung nebeneinander angeordnet sind, insbesondere mit einem vorbestimmten Abstand dazwischen. Selbstverständlich können auch mehr als zwei Filterelemente zum Einsatz kommen; dies kann insbesondere sinnvoll sein, wenn das zumindest eine Filterelement aus mehreren Filtereinheiten bzw. Subfilterelementen zusammengesetzt ist.

Das Aufnahmegehäuse kann eine titandioxidhaltige Beschichtung auf seiner Außenseite aufweisen zur fotokatalytischen Oxidation von NO2 zu NO3.

Zwischen den Filterelementen kann auch ein Abstand vorgesehen sein, der beispielsweise zur Durchführung von Kabeln, Hydraulikleitungen und dergleichen dienen kann. Ferner kann es sinnvoll sein, zwei getrennte Filterelemente einzusetzen, da ein großes Filterelement, das sich über einen wesentlichen Teil der Fahrzeugbreite erstreckt, schwierig zu produzieren ist und zudem ein großes Gewicht aufweist, was den Austausch erschwert. Bei einer Ausführungsform mit zwei oder mehr getrennten Filterelementen kann zudem vorgesehen sein, dass jedes Filterelement ein eigenes Gehäuse aufweist.

Gemäß einer noch weiteren Ausführungsform kann die Umgebungsluftreinigungsvorrichtung zumindest ein Strömungsleitelement aufweisen, das bevorzugt an einer vorderen, äußeren und in Fahrzeughochrichtung verlaufenden Seitenkante der Umgebungsluftreinigungsvorrichtung angeordnet ist. Ferner kann das Strömungsleitelement an einer vorderen, in Fahrzeugquerrichtung verlaufenden unteren und/oder oberen Kante der Umgebungsluftreinigungsvorrichtung vorliegen. Hierdurch kann das Filterelement vergleichsweise klein ausgeführt werden und der Staudruck vor dem Filterelement erhöht werden, sodass auch bei geringeren Fahrgeschwindigkeiten eine Durchströmung möglich wird. In einer bevorzugten Ausführungsform sind sowohl an den vorderen Seitenkanten (vertikal) der Umgebungsluftreinigungsvorrichtung als auch an der unteren Querkante (horizontal) solche Strömungsleitelemente angeordnet.

Bei dem Strömungsleitelement kann es sich etwa um eine Strömungsleitplatte handeln, die bevorzugt unter einem Winkel zur Fahrzeughoch-, Längs- oder Querachse verkippt angeordnet ist. Die Strömungsleitplatte kann beispielsweise als Strömungsleitblech oder Gummiformteil, -profil und/oder -lippe ausgebildet sein. Die Erfindung ist jedoch nicht auf die genannten Werkstoffe beschränkt; so kann das Strömungsleitelement insbesondere auch andere Kunststoffe aufweisen. Optional kann auch eine Schaltbarkeit des Strömungsleitelements vorgesehen sein, wobei es sich um ein verstellbares Strömungsleitblech handeln kann, das zwischen verschiedenen Positionen verstellbar ist, um die Luftstromführung zu beeinflussen. Das Strömungsleitblech ist zwischen einer Außerfunktionsposition und einer Funktionsposition verstellbar, wobei in der Funktionsposition die Luftströmung zu dem Filterelement in der Feinstaub-Absaugvorrichtung geleitet wird. In der Außerfunktionsposition kann dagegen die Luftzufuhr zu dem Filterelement zumindest verringert sein.

Bevorzugt kann das mindestens eine Strömungsleitelement so ausgestaltet sein, dass im Fahrbetrieb der lokale Luftdruck im Einlassbereich der Umgebungsluftreinigungsvorrichtung erhöht und/oder im Auslassbereich gesenkt wird. Hierdurch kann die Abscheideleistung pro Fahrstrecke verbessert werden.

Gemäß einer vorteilhaften Weiterbildung kann vorgesehen sein, dass die Umgebungsluftreinigungsvorrichtung dem zumindest einen Filterelement strömungsmäßig vorgeschaltet wenigstens einen Vor- bzw. Grobabscheider aufweist, insbesondere ein Abscheidegitter, Abscheidenetz, ein Prallblech und/oder ein Vorabscheidervlies.

Es kann beispielsweise auch vorgesehen sein, dass der Vor- bzw. Grobabscheider, insbesondere das Abscheidegitter, mit dem zumindest einen Strömungsleitelement verbunden ist. Der Vor- bzw. Grobabscheider, insbesondere das Abscheidegitter, ist dazu vorgesehen, zu verhindern, dass Fremdkörper, welche aufgrund ihrer kinetischen Energie das Filterelement schädigen könnten, in die Umgebungsluftreinigungsvorrichtung gelangen. Das Abscheidegitter kann zu diesem Zweck grobmaschig ausgeführt sein und eine Maschenweite von 1 mm bis 4 mm aufweisen, sodass durch dieses nur ein vernachlässigbar kleiner zusätzlicher Druckverlust entsteht. Solche Gitter sind beispielsweise als Aluminiumstreckgitter äußerst kostengünstig verfügbar.

Ein Vorabscheidervlies kann insbesondere rohseitig auf dem Filterelement angeordnet werden, beispielsweise verklebt, oder in einem vorbestimmten Abstand zum Filterelement vorliegen, wobei eine Anordnung direkt auf dem Filterelement den Vorteil hat, dass das Vorabscheidervlies beim Service zusammen mit dem Filterelement gewechselt wird. Vorteilhafterweise hat das Vorabscheidervlies zudem wasserabscheidende und drainierende Eigenschaften und ist daher in der Lage, das Filterelement zusätzlich zu schützen.

Die Umgebungsluftreinigungsvorrichtung weist einen dem zumindest einen Filterelement strömungsmäßig vorgeschalteten Wasserabscheider zur Abscheidung von Regen- und/oder Spritzwasser auf. Der Wasserabscheider weist einen Lamellenabscheider und/oder eine hydrophobe, insbesondere hydrophob imprägnierte, Abscheidelage auf. Zusätzlich kann der Wasserabscheider schließbare Klappen oder Lamellen aufweisen. Der Wasserabscheider kann insbesondere abhängig von einem Regensensorsignal oder einem Scheibenwischersignal zugeschaltet oder in den Strömungsweg gestellt werden. Im Falle von schließbaren Klappen oder Lamellen können diese ebenfalls abhängig von einem Regensensorsignal oder Scheibenwischersignal verstellt werden. Der Wasserabscheider kann insbesondere dem Vor- bzw. Grobabscheider vor- oder nachgeschaltet vorliegen. Ein Scheibenwischersignal kann bei Kopplung der Umgebungsluftreinigungsvorrichtung mit dem Straßenfahrzeug problemlos aus einem Datenbus des Fahrzeugs extrahiert werden und beschreibt einen Betriebsparameter des Scheibenwischers (z. B. Ein/Aus, Wischgeschwindigkeit).

An der Umgebungsluftreinigungsvorrichtung ist eine Montageöffnung für das Filterelement vorgesehen, die seitlich, vertikal oder in bestimmungsgemäßer Fahrtrichtung hinten angeordnet ist. Hierbei ist bevorzugt, dass die Umgebungsluftreinigungsvorrichtung Haltemittel für das mindestens eine Filterelement umfasst, die formschlüssig eine Bewegung des Filterelementes in Fahrtrichtung unterbinden, um bei Bremsungen und Auffahrsituationen ein Auslösen des Filterelementes zu verhindern. Die Haltemittel sind bevorzugt so ausgestaltet, dass der Öffnungsquerschnitt innerhalb der Haltemittel kleiner ist als der Querschnitt des Filterelements quer zur Fahrtrichtung.

Gemäß einer vorteilhaften Weiterbildung kann vorgesehen sein, dass die Umgebungsluftreinigungsvorrichtung einen Schubladenmechanismus und/oder lösbare Rastverbindungen für die Montage des Filterelements in der Umgebungsluftreinigungsvorrichtung aufweist. So kann eine einfach wartbare Umgebungsluftreinigungsvorrichtung bereitgestellt werden.

Gemäß einer weiteren Weiterbildung wird vorgeschlagen, das Filterelement mit einer Anströmfläche von zumindest 100 mm x 250 mm auszuführen, bevorzugt zumindest 150 mm x 500 mm. Alternativ oder zusätzlich kann vorgesehen sein, dass das Volumen des zumindest einen Filterelements zumindest 6,5 I beträgt, bevorzugt zumindest 15 I. Die Netto-Filterfläche des zumindest einen Filterelements soll zumindest 3 m², bevorzugt zumindest 7 m², am meisten bevorzugt zumindest 15 m², betragen. Bei Einsatz eines teil- oder vollsynthetischen Filtermediums anstelle eines cellulosebasierten können auch geringere Filterflächen ausreichend sein.

Bei dem Filtermedium kann es sich um ein ein- oder mehrlagiges Filtermedium handeln, das zumindest eine Partikelfilterlage, insbesondere eine Celluloselage und/oder eine Kunstfaserlage, insbesondere ein Kunstfaservlies, und/oder zumindest eine Gasfiltrationslage, insbesondere mit einer Aktivkohleschüttung als Aktivmaterial, hat. Die Gasfiltrationslage kann mit entsprechenden Aktivmaterialien versehen sein, die eine Ad-/Absorption verschiedener gesundheitsschädlicher Gase aus der Umgebungsluft ermöglichen, beispielsweise Ozon, Schwefeldioxid, Stickoxide und Kohlenstoffmonoxid. Hierzu können auch verschiedene Aktivmaterialien zum Einsatz kommen. Die Aktivkohle kann auch imprägniert sein, um die Abscheidung bestimmter Gase zu verbessern; beispielsweise unter Verwendung von Kupfer oder Kupferverbindungen, um die Absorption von NOₓ zu erhöhen. Durch Einsatz einer derartigen Aktivkohleschüttung kann die Absorptionsleistung des/der eingesetzten Filterelement(e) so eingestellt werden, dass die Umgebungsluftreinigungsvorrichtung in etwa so viel NOₓ absorbiert, wie das Straßenfahrzeug, an dem sie montiert ist, emittiert. Es kann bevorzugt katalytische Aktivkohle verwendet werden, die beispielsweise zur Umwandlung von Stickoxid in weniger schädliche Stoffe, wie beispielsweise Stickstoff und Kohlendioxid, verwendbar ist.

Eine Höhe des zumindest einen Filterelements kann beispielsweise in einem Bereich zwischen 100 mm und 600 mm, bevorzugt zwischen 150 mm und 500 mm, liegen. Die Parameter, die bei der erfindungsgemäßen Montagesituation den größten Einfluss auf die Abscheideleistung der Umgebungsluftreinigungsvorrichtung haben, sind die Höhe des Filterelements und der Durchströmungswiderstand des Filterelements, der wesentlich durch das Filterkonzept bestimmt wird, und nicht etwa die Eintrittsgeschwindigkeit. Es muss daher eine bestimmte Mindesthöhe eingehalten werden, um eine zufriedenstellende Abscheideleistung zu erreichen.

Die Umgebungsluftreinigungsvorrichtung sollte einen Druckverlust bei einer Anströmung mit Luft bei Normbedingungen mit 1,5 m/s von höchstens 200 Pa, bevorzugt bei 2,5 m/s von höchstens 250 Pa, aufweisen.

In einer Ausgestaltung umfasst die Umgebungsluftreinigungsvorrichtung zumindest eine Luftfördereinrichtung zur Unterstützung der Durchströmung, insbesondere zur geregelten Unterstützung der Durchströmung, beispielsweise, aber nicht hierauf beschränkt, im Stand eines Fahrzeugs oder bei geringen Fahrgeschwindigkeiten, insbesondere abhängig von der Fahrgeschwindigkeit. Die Luftfördereinrichtung weist insbesondere ein elektrisches Anschlusselement auf, das mit einer Stromversorgung eines Straßenfahrzeugs verbindbar ist. Bei der Stromversorgung des Straßenfahrzeugs kann es sich beispielsweise um ein Bordnetz handeln, das mittels Festverdrahtung oder einer Außenbereichssteckdose für den Anschluss der Luftfördereinrichtung der Umgebungsluftreinigungsvorrichtung nutzbar ist.

Alternativ oder zusätzlich kann die Stromversorgung der Luftfördereinrichtung auch durch eine Photovoltaikstromquelle erfolgen, die auf der Umgebungsluftreinigungsvorrichtung angeordnet sein kann, und/oder eine vom Fahrtwind antreibbare Windturbine.

Bei der Luftfördereinrichtung kann es sich um einen Axialventilator oder ein Axialgebläse handeln. Die Luftfördereinrichtung kann insbesondere einen elektrischen Antrieb aufweisen. Über das Bordnetz kann hierbei eine hinreichend große elektrische Leistung zum Antrieb der zumindest einen Luftfördereinrichtung abgegriffen werden; beispielsweise kann die Luftfördereinrichtung eine elektrische Leistung von 120 W aufweisen. Axialgebläse oder -ventilatoren werden aufgrund ihrer vorteilhafterweise in Axialrichtung gesehen geringen Montagemaße bevorzugt eingesetzt; die Erfindung ist jedoch nicht hierauf beschränkt; radial oder diagonal arbeitende Strömungsmaschinen sind von dieser ebenso umfasst. Die Erfindung erfasst ausdrücklich sowohl passiv durchströmte Umgebungsluftreinigungsvorrichtungen als auch aktiv durchströmte Umgebungsluftreinigungsvorrichtungen mit zumindest einer Luftfördereinrichtung. Die Luftfördereinrichtung wird in Bezug zu dem Filterelement bevorzugt saugend betrieben.

Die erfindungsgemäße Umgebungsluftreinigungsvorrichtung funktioniert in einer Ausführungsform nach dem Prinzip der passiven Durchströmung durch den durch die Fahrgeschwindigkeit erzeugten Staudruck. Da das Problem der exzessiven Luftverschmutzung in erster Linie in Ballungszentren existiert, in denen die Fahrgeschwindigkeit üblicherweise unter 40 km/h liegt, sollte der Druckverlust der Umgebungsluftreinigungsvorrichtung so gering wie möglich sein, sodass diese bei den üblichen bei innerstädtischen Geschwindigkeiten auftretenden Staudrücken noch passiv durchströmt werden kann. So beträgt der Staudruck bei einer Fahrgeschwindigkeit von 30 km/h etwa 40 Pa und bei 40 km/h etwa 75 Pa.

Ein weiterer Aspekt der vorliegenden Erfindung betrifft ein Straßenfahrzeug, insbesondere einen Personenkraftwagen, oder einen Lastkraftwagen, insbesondere einen leichten Lastkraftwagen. Das Straßenfahrzeug weist eine erfindungsgemäße Umgebungsluftreinigungsvorrichtung auf, die zur Entfernung von Stäuben, insbesondere Feinstäuben, und/oder Gasen aus der Umgebungsluft ausgebildet ist und in einem Außenbereich des Straßenfahrzeugs angeordnet ist. Die Umgebungsluftreinigungsvorrichtung weist zumindest ein Filterelement auf und ist mittels der Montagevorrichtung mit einer fahrzeugseitigen Montageeinrichtung für Dachlasten starr gekoppelt.

Die Vorteile einer derartigen Anordnung wurden bereits im Zusammenhang mit der erfindungsgemäßen Umgebungsluftreinigungsvorrichtung beschrieben; diese sind uneingeschränkt auf das erfindungsgemä-ße Straßenfahrzeug übertragbar. Die in Zusammenhang mit der erfindungsgemäßen Umgebungsluftreinigungsvorrichtung offenbarten Merkmale können in beliebiger Kombination auch mit dem erfindungsgemäßen Straßenfahrzeug kombiniert werden und umgekehrt.

Die Anordnung der Umgebungsluftreinigungsvorrichtung außerhalb der Karosserie des Fahrzeugs ist vorteilhaft, da die Form eines Fahrzeugs regelmäßig dafür ausgelegt ist, die Strömung bestmöglich um das Fahrzeug herumzuführen. Eine Anordnung der Umgebungsluftreinigungsvorrichtung außerhalb der Karosserie kann daher zur Optimierung der durch die Umgebungsluftreinigungsvorrichtung führbaren Luftmenge beitragen, insbesondere wenn die Umgebungsluftreinigungsvorrichtung bzw. Strömungsleitmittel wie bevorzugt so ausgestaltet sind, dass ein Teil der um das Fahrzeug strömenden Luft gezielt zu der Umgebungsluftreinigungsvorrichtung gelenkt wird; dies ist gerade bei der Dachanordnung besonders gut möglich.

Die Umgebungsluftreinigungsvorrichtung ist insbesondere in Fahrzeuglängsrichtung durchströmbar. Bevorzugt ist in Fahrtrichtung hinter der Umgebungsluftreinigungsvorrichtung eine freie Abströmzone vorgesehen. Alternativ zur Durchströmungsrichtung in Fahrzeuglängsrichtung kann die Durchströmung, wenn das Fahrzeug auf einer horizontalen Unterlage steht, auch als "horizontal" bezeichnet werden. Bei einer günstigen Anordnung von Ein- und Auslassöffnung für die zu reinigende Luft und einer entsprechenden Leitung der zu reinigenden Luft innerhalb der Umgebungsluftreinigungsvorrichtung ist selbstverständlich auch eine Strömungsführung innerhalb der Umgebungsluftreinigungsvorrichtung zumindest teilweise senkrecht zur Fahrtrichtung möglich.

In einer besonders bevorzugten Ausführungsform kann das zumindest eine Filterelement der Umgebungsluftreinigungsvorrichtung in Fahrzeuglängsrichtung bzw. "horizontal" durchströmt werden, d. h. es ist so in Bezug zur Umgebungsluftreinigungsvorrichtung verbaut, dass keinerlei Strömungsumlenkungen nötig sind, die einen nachteiligen Druckverlust erzeugen.

Ferner kann sich die Umgebungsluftreinigungsvorrichtung vorteilhafterweise über einen wesentlichen Teil einer Fahrzeugbreite erstrecken. Bevorzugt erstreckt sich die Umgebungsluftreinigungsvorrichtung über zumindest 30 % der Fahrzeugbreite, stärker bevorzugt über zumindest 40 %.

Um einen Eindruck von der hervorragenden Wirksamkeit eines solchen erfindungsgemäßen Fahrzeugs mit Umgebungsluftreinigungsvorrichtung zu bekommen, wurden Strömungssimulationen unter folgenden Randbedingungen durchgeführt:
- Partikelkonzentration in der Testluft mit 25 µg/m³ PM2,5, 50 µg/m³ PM10,
- Höhe des Filterelements 300 mm,
- Breite des Filterelements 600 mm,
- Abscheidegrad für PM2,5 und PM10 80 %, cellulosebasiertes Filtermedium, Dicke des Filtermediums 0,7 mm, Luftdurchlässigkeit 700 l/m²s mit 9 m² effektiver Filterfläche.

Basierend auf diesen Annahmen ergibt sich, dass ein solches Filterelement bereits bei passiver Durchströmung mehr PM10-Partikel abscheidet, als der Dieselmotor erzeugt. Dabei wurde eine PM10-Emission von 6 mg/km angenommen. Somit lassen sich die Emissionen auf den Wert eines Elektrofahrzeugs reduzieren. Durch Einbau aktiver Komponenten, wie beispielsweise Lüfter, lässt sich die Abscheideleistung bei niedrigen Geschwindigkeiten nochmals deutlich verbessern.

Schließlich wird ein Filterelement für die erfindungsgemäße Umgebungsluftreinigungsvorrichtung beansprucht. Die im Bezug zum erfindungsgemäßen Straßenfahrzeug und zur erfindungsgemäßen Umgebungsluftreinigungsvorrichtung genannten Merkmale und Vorteile sind hierauf in beliebiger Kombination übertragbar.

Weiter wird ein Verfahren zur Reduzierung der Gesamtemission eines Straßenfahrzeugs mit mindestens einer vorbestimmten Emissionskomponente offenbart. Das Verfahren sieht vor, dass eine insbesondere erfindungsgemäße Umgebungsluftreinigungsvorrichtung in einer vorbestimmten Montageposition an einem Straßenfahrzeug montiert wird, wobei die Umgebungsluftreinigungsvorrichtung für die Montage in der Montageposition so ausgelegt ist, dass im Fahrbetrieb durch die Umgebungsluft, in welcher vorbestimmte Grenzwerte erreicht oder überschritten sind und die im Bereich der Montageposition der Umgebungsluftreinigungsvorrichtung zugeführt wird, durch die Umgebungsluftreinigungsvorrichtung mindestens die Menge der durchschnittlichen Emission der mindestens einen Emissionskomponente abgeschieden wird. Ein durch dieses Verfahren erhältliches Fahrzeug ist ebenfalls Teil der vorliegenden Erfindung.

Beispielsweise wird dabei zunächst eine Ermittlung der durchschnittlichen Emission des Straßenfahrzeugs von mindestens einer Emissionskomponente vorgenommen, insbesondere von Partikeln und/oder Stickstoff-Oxiden, insbesondere pro Kilometer, insbesondere im Stadtbetrieb. Hierzu können entweder Fahrbetriebsmessungen oder Durchschnittswerte herangezogen werden, beispielsweise Herstellerangaben.

Insbesondere anschließend kann bevorzugt eine Montageposition der Umgebungsluftreinigungsvorrichtung am Fahrzeug bestimmt werden. Weiter bevorzugt kann aufgrund der teilweise vom Abstand von der Fahrbahnoberfläche abhängigen Konzentrationen von Emissionskomponenten wie Feinstaub die Luftbelastung, d. h. die Konzentration der mindestens einen Emissionskomponente in der Montageposition, insbesondere in deren Abstand zur Fahrbahnoberfläche, ermittelt werden, beispielsweise durch Absolutmessung oder durch eine Vergleichsmessung mit Messungen in Normmesshöhe, in welcher amtliche Messungen vorgenommen werden. Als Montagepositionen kommen insbesondere in Betracht: In einem Heckbereich im Bereich eines hinteren Stoßfängers oder integriert in einen hinteren Stoßfänger, in einem Frontbereich im Bereich eines vorderen Stoßfängers, auf dem Dach, an bzw. auf einem Anhänger oder in einem Unterbodenbereich, insbesondere an einem Fahrzeugheck in Fahrtrichtung gesehen hinter einer Hinterachse des Straßenfahrzeugs.

Das beschriebene Verfahren kann nach Schritten gegliedert folgendermaßen beschrieben werden:
a. Ermittlung der durchschnittlichen Emission des Straßenfahrzeugs von mindestens einer Emissionskomponente, insbesondere von Partikeln und/oder Stickstoff-Oxiden, insbesondere pro Kilometer, insbesondere im Stadtbetrieb;
b. Festlegen einer Montageposition einer Umgebungsluftreinigungsvorrichtung am Fahrzeug;
c. Optional Ermittlung der Luftbelastung in der Montageposition der Umgebungsluftreinigungsvorrichtung bei Erreichen oder Überschreiten von vorbestimmten Grenzwerten;
d. Montage einer Umgebungsluftreinigungsvorrichtung in der Montageposition, wobei die Umgebungsluftreinigungsvorrichtung für die Montage in der Montageposition so ausgelegt ist, dass im Fahrbetrieb durch Umgebungsluft, in welcher vorbestimmte Grenzwerte erreicht oder überschritten sind, durch die Umgebungsluftreinigungsvorrichtung mindestens die Menge der durchschnittlichen Emission der mindestens einen Emissionskomponente des Straßenfahrzeugs abgeschieden wird.

Ferner kann die Montageposition so gewählt werden, dass insbesondere unterstützt durch Strömungsleitmittel mindestens ein Teil der Emissionen des Straßenfahrzeugs der Umgebungsluftreinigungsvorrichtung zugeführt wird, beispielsweise die Staubemissionen von Bremsscheiben und/oder Reifen oder die Abgasemissionen aus dem Abgasstrang einer Brennkraftmaschine des Straßenfahrzeugs. Hierdurch wird die Abscheideleistung durch Wahl einer Montageposition mit lokal erhöhter Konzentration von Emissionskomponenten erhöht. Der Abstand zwischen dem Auslass der Abgasanlage und der Umgebungsluftreinigungsvorrichtung beträgt dabei bevorzugt 5 cm bis 50 cm, besonders bevorzugt 5 cm bis 30 cm.

Bevorzugt wird die Montageposition so gewählt, dass die Umgebungsluftreinigungsvorrichtung in einer Höhe von kleiner 2 m, bevorzugt kleiner 1,5 m, besonders bevorzugt kleiner 1 m, von der Fahrbahnoberfläche gemessen angeordnet ist. Bevorzugt ist die Montageposition ferner an einer Stelle gewählt, an welcher eine Konzentrationserhöhung von im Bereich der Fahrbahndecke befindlichem Staub durch Aufwirbelung durch das erfindungsgemäße Fahrzeug vorhanden ist. Dies trifft insbesondere zu auf die Positionen in einem Heckbereich im Bereich eines hinteren Stoßfängers oder integriert in einen hinteren Stoßfänger, auf dem Dach, an einem Anhänger oder in einem Unterbodenbereich an einem Fahrzeugheck in Fahrtrichtung gesehen hinter einer Hinterachse des Straßenfahrzeugs.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:
- Fig. 1: in schematischer Darstellung ein erfindungsgemäßes Straßenfahrzeug in einer Seitenansicht;
- Fig. 2: in schematischer Darstellung eine erste Ausführungsform einer Umgebungsluftreinigungsvorrichtung bevorzugt für das Straßenfahrzeug in Fig. 1;
- Fig. 3: in schematischer Darstellung ein erfindungsgemäßes Straßenfahrzeug in einer weiteren Ausführungsform in Seitenansicht;
- Fig. 4: in schematischer Darstellung eine erste Ausführungsform einer Umgebungsluftreinigungsvorrichtung bevorzugt für das Straßenfahrzeug in Fig. 3;
- Fig. 5 und 6: eine schematische Darstellung eines anströmseitigen Bereichs einer Umgebungsluftreinigungsvorrichtung;
- Fig. 7: eine isometrische Darstellung einer Modifikation für eine erfindungsgemäße Umgebungsluftreinigungsvorrichtung;
- Fig. 8: eine isometrische Darstellung einer weiteren Modifikation für eine erfindungsgemäße Umgebungsluftreinigungsvorrichtung;
- Fig. 9: eine isometrische Darstellung eines Taschenfilters, wie er in der erfindungsgemäßen Umgebungsluftreinigungsvorrichtung einsetzbar ist;
- Fig. 10: eine isometrische Darstellung eines V-Filters, wie er in der erfindungsgemäßen Umgebungsluftreinigungsvorrichtung einsetzbar ist; und
- Fig. 11: eine isometrische Darstellung eines Flachfilterelements mit Faltenstabilisierungsmitteln, wie es in der erfindungsgemäßen Umgebungsluftreinigungsvorrichtung einsetzbar ist.

### Ausführungsform(en) der Erfindung

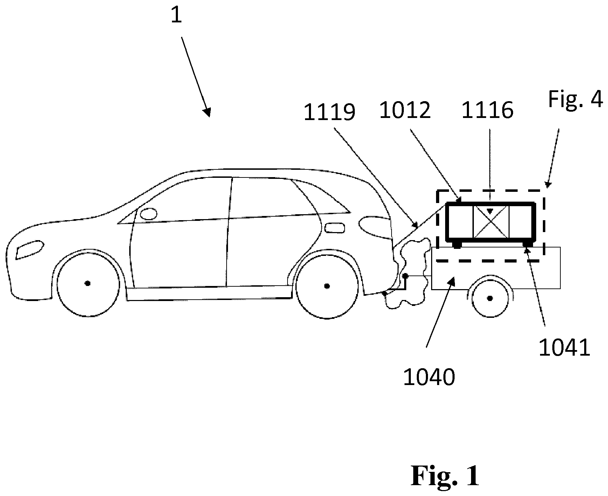

Fig. 1 zeigt in schematischer Darstellung ein erfindungsgemäßes Straßenfahrzeug 1 in einer Seitenansicht, bei welchem die Umgebungsluftreinigungsvorrichtung 1012 im Heckbereich des Straßenfahrzeugs 1 auf einem mitfahrenden Anhänger 1040 angeordnet und mittels Befestigungsmitteln 1041 befestigt ist.

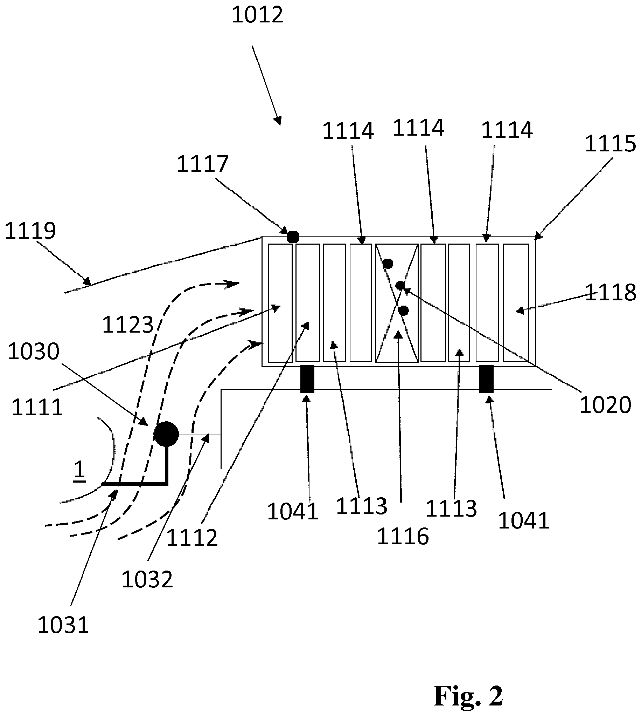

Fig. 2 zeigt in Detailansicht einen Ausschnitt der Fig. 1, mit einer schematischen Darstellung einer Ausführungsform einer Umgebungsluftreinigungsvorrichtung 1012. Die Umgebungsluftreinigungsvorrichtung 1012 ist auf einem Anhänger 1040 angeordnet und mittels Befestigungsmitteln 1041 befestigt, beispielsweise mittels einer Querträgerbefestigungsanordnung, wie sie auch für Dachlasten von Straßenfahrzeugen verwendet wird. Die Ausführungsform der Fig. 2 wird horizontal durchströmt. Zur Unterstützung der Anströmung ist an der dem Fahrzeug zugewandten Stirnseite der Umgebungsluftreinigungsvorrichtung 1014, welche den Einlass 1111 bildet oder aufweist, insbesondere an deren oberer Kante, ein anströmseitiges Strömungsleitelement in Form einer Leitschaufel 1119 angeordnet, um die Luft dem Einlass 1111 zuzuführen.

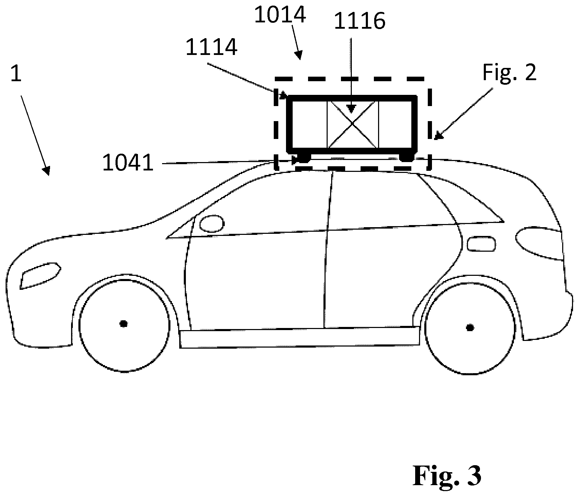

Fig. 3 zeigt in schematischer Darstellung ein erfindungsgemäßes Straßenfahrzeug 1 in einer Seitenansicht, bei welchem die Umgebungsluftreinigungsvorrichtung 1014 auf oder über dem Dach des Straßenfahrzeugs 1 angeordnet und mittels Befestigungsmitteln 1041 befestigt ist. Bei den Befestigungsmitteln kann es sich insbesondere um formschlüssige und/oder kraftschlüssige Befestigungselemente, insbesondere Klemmelemente, beispielsweise mit verstellbaren Klemmbacken, oder ähnliches handeln. Ferner können magnetische Befestigungselemente und/oder Saugnäpfe eingesetzt werden.

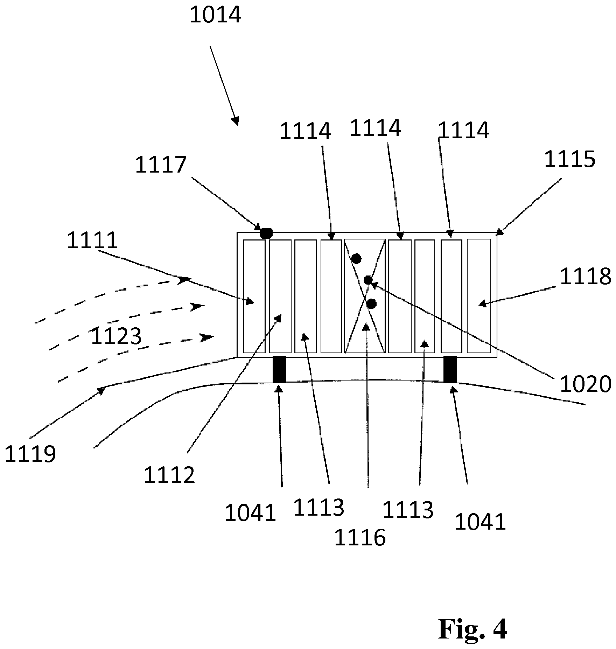

Fig. 4 zeigt in Detailansicht einen Ausschnitt der Fig. 3. Es ist erkennbar, dass die Ausführungsform der Umgebungsluftreinigungsvorrichtung 1014 im Wesentlichen der aus Fig. 3 entspricht, wobei eine Abweichung darin bestehen kann, dass an der in Fahrtrichtung vorne angeordneten Stirnseite der Umgebungsluftreinigungsvorrichtung 1014, welche den Einlass 1111 bildet oder aufweist, insbesondere an deren unteren Kante, ein anströmseitiges Strömungsleitelement bzw. eine Leitschaufel 1119 angeordnet ist, um die Luft dem Einlass 1111 zuzuführen.

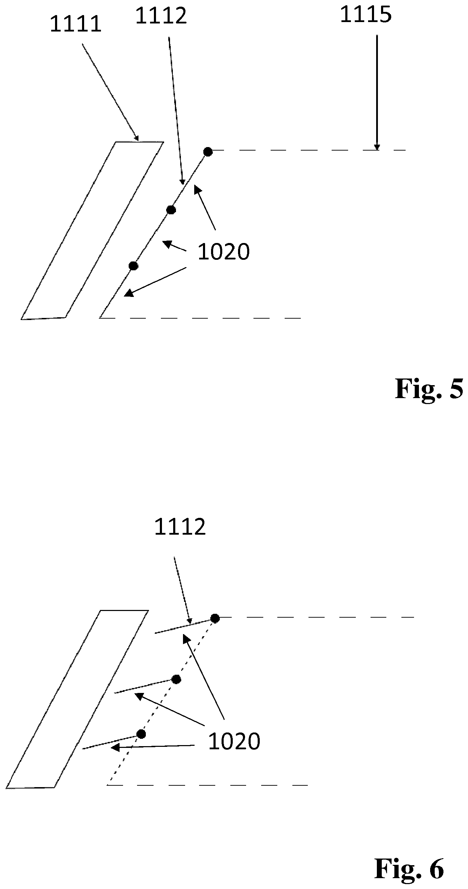

Fig. 5 und 6 zeigen eine schematische Darstellung einer möglichen Ausgestaltung eines anströmseitigen Bereichs einer erfindungsgemäßen Umgebungsluftreinigungsvorrichtung. Als Schutzstufe 1112 sind hier bevorzugt eine oder mehrere motorisch betätigte Mittel zum Verhindern des Eindringens von Tieren wie Nagern, Vögeln o. Ä., wie beispielsweise ein Gitter, umfasst.

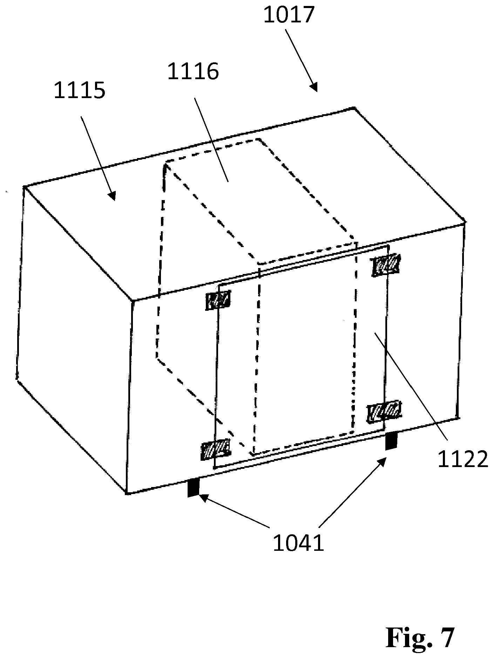

Fig. 7 zeigt eine isometrische Darstellung einer Modifikation 1017 für eine erfindungsgemäße Umgebungsluftreinigungsvorrichtung 1012, 1014, 1017, 1018. Gemäß dieser Modifikation umfasst das Gehäuse 1115 eine Wartungsöffnung mit einer verschließbaren Wartungsklappe 1122, die einen Wechsel des Filterelements 1116 erlaubt. Bei Umgebungsluftreinigungsvorrichtungen 1012, 1014, 1017, 1018, die von vorne, unten oder oben angeströmt werden, beispielsweise den in Fig. 1 - Fig. 4 gezeigten, ist eine Anordnung der Wartungsklappe 1122 an einer in Fahrtrichtung seitlichen Wand des Gehäuses 1115 oder an einer oberen, der Fahrbahn abgewandten Wand des Gehäuses 1115 möglich und für die Wartung vorteilhaft.

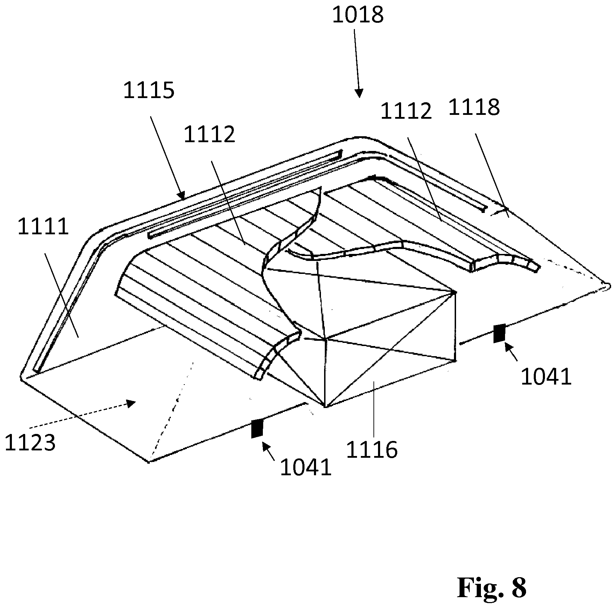

Fig. 8 zeigt eine isometrische Darstellung einer weiteren Modifikation 1018 für eine erfindungsgemäße Umgebungsluftreinigungsvorrichtung 1012, 1014, 1017, 1018. Hierbei ist als Schutzstufe 1112 ein anströmseitiger erster motorisch beweglicher Rollladen 1124 und/oder ein zweiter motorisch beweglicher Rollladen 1125 im Gehäuse 1115 angeordnet, welche Einlass 1111 bzw. Auslass 1118 verschließen können. Wie bei den vorgenannten Klappen ist die Steuerung dieser Rollläden bzw. Klappen bevorzugt so ausgelegt, dass die Rollläden oder Klappen bei abgestelltem Fahrzeug und/oder ab einer vorbestimmten Strömungsgeschwindigkeit (Fahrgeschwindigkeit) wie beispielsweise 100 km/h und/oder bei Regen, Schnee, oder sonstigem temporären Wassereintrag (wie in der Waschstraße, beim Betätigen der Scheibenwaschanlage o. ä.) geschlossen sind oder werden. Eine funktionale Verbindung mit der in Bezug auf Fig. 7 gezeigten Modifikation ist derart denkbar, dass die Wartungsklappe 1122 nur öffenbar ist, wenn die Klappen oder Rollläden offen sind, wobei die Klappen oder Rollläden (d. h. verallgemeinert der Einlass 1111 und der Auslass 1118) jeweils geschlossen sind, wenn das Fahrzeug nicht in Betrieb ist, und geöffnet sind, wenn das Fahrzeug in Betrieb ist. Selbstverständlich sind die genannten Funktionen auch unabhängig voneinander vom Betriebszustand des Fahrzeugs abhängig steuerbar.

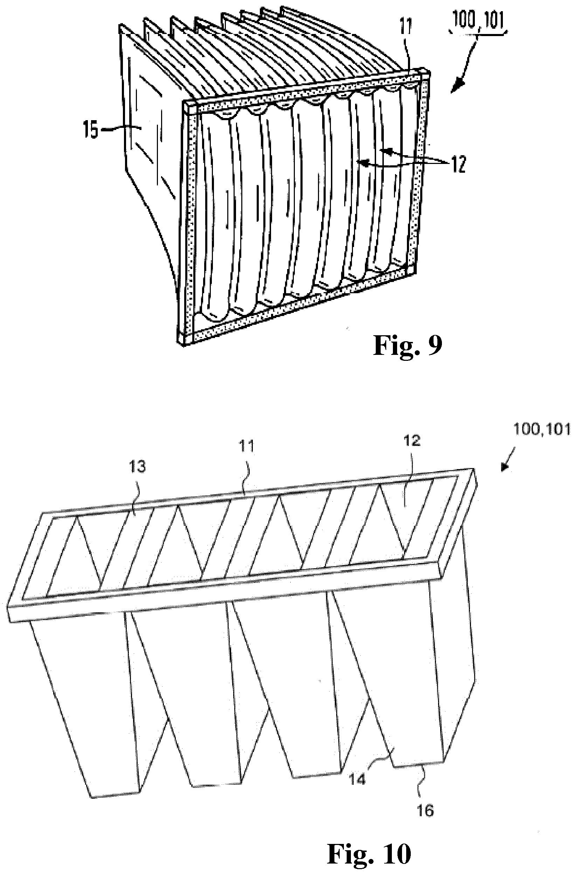

In Fig. 9 ist schematisch ein Taschenfilterelement 100,101 gezeigt, wie es in der Umgebungsluftreinigungsvorrichtung 10 des erfindungsgemäßen Straßenfahrzeugs 1 eingesetzt werden kann. Das Taschenfilterelement 100,101 hat einen umlaufenden rechteckigen Rahmen 11, an dem eine Mehrzahl, hier acht, Filtertaschen 15 befestigt ist. Die Filtertaschen 15 bestehen aus einem geeigneten Filtermedium und werden durch Vernähen aus dem Filtermedium gebildet. Geeigneterweise ist das Taschenfilterelement so in der Umgebungsluftreinigungsvorrichtung 10 anzuordnen, dass die Filtertaschen 15 mit ihren Hohlräumen 12, die die jeweiligen Anströmseiten bilden, in Fahrtrichtung nach vorne weisen. Um ein zu starkes Aufblähen der Filtertaschen 15 durch die Anströmung zu verhindern, können einander gegenüberliegende flächige Filtermediumabschnitte mit einer geeigneten Fadenlänge vernäht sein. Ansonsten ist der Aufbau solcher Filterelemente dem Fachmann bekannt. Taschenfilterelemente sind beispielsweise aus dem Bereich der Ansaugfilter für Gasturbinen oder dem HVAC-Bereich am Markt in einer Vielzahl von Abmessungen verfügbar. Das gezeigte Taschenfilterelement 100,101 hat die Abmessungen 287 mm x 592 mm x 365 mm.

Ferner ist in Fig. 10 ein V-Filter-Element 100,101 gezeigt, das vier in einer V-Form zueinander angeordnete Filtereinheiten aufweist, die jeweils durch zwei Flachfilterelemente 13 gebildet werden, wobei die Flachfilterelemente 13 beispielsweise einen gefalteten Filterbalg aufweisen. Das gezeigte V-Filter-Element 100,101 umfasst daher acht Flachfilterelemente 13. Das V-Filter-Element 100,101 verfügt über einen Rahmen 11, an dem die V-förmigen Filtereinheiten befestigt sind. An der dem Rahmen 11 abgewandten Unterseite sind jeweils zwei Flachfilterelemente, die eine V-förmige Filtereinheit bilden, jeweils fluiddicht miteinander verbunden. Die das 'V' begrenzenden Seitenflächen sind jeweils durch eine flächige Abdeckung 14 fluiddicht verschlossen. Zum Verbau gilt bereits in Bezug auf Fig. 9 Ausgeführtes: Das V-Filter-Element 100,101 wird geeigneterweise so in die Umgebungsluftreinigungsvorrichtung 1012, 1014, 1017, 1018 eingesetzt, dass die Hohlräume 12 zur Anströmseite weisen, d. h. beim Verbau in dem erfindungsgemäßen Straßenfahrzeug 1 in Fahrtrichtung. Die Abmessungen des V-Filter-Elements betragen 287 mm x 592 mm x 300 mm. Die Faltenhöhen der jeweiligen Flachfilterelemente 13 betragen in der gezeigten Ausführungsform 25 mm.

Sowohl für das in Fig. 9 gezeigte Taschenfilterelement als auch für das in Fig. 10 gezeigte V-Filter-Element gilt, dass von diesen eine geeignete Anzahl nebeneinander angeordnet werden kann, um eine Umgebungsluftreinigungsvorrichtung 1012, 1014, 1017, 1018 mit einer hinreichenden Breite zu schaffen. Beide Varianten sind in den zuvor und nachfolgend beschriebenen Ausführungsformen von Straßenfahrzeugen oder Umgebungsluftreinigungsvorrichtungen verwendbar.

Als Filtermaterialien können vollsynthetische Vliese, Glasfaser- oder Cellulosemedien sowie Kombinationen hieraus eingesetzt werden, die zusätzlich auch noch über eine Elektretwirkung verfügen können bzw. entsprechend ausgerüstet sind, um ein gutes Verhältnis aus Druckverlust und Abscheideleistung zu erzielen. Vorzugsweise besitzen diese Medien hydrophobe Eigenschaften und zeichnen sich durch eine gute Wasserstabilität aus. Es kann auch ein Filtermedium eingesetzt werden, das vollständig aus Cellulose besteht. Der bevorzugte Berstdruck der Filterelemente soll insbesondere über 500 Pa, bevorzugt über 1.000 Pa betragen. Die bevorzugte Staubkapazität der Filterelemente beträgt bevorzugt zumindest 300 g, bevorzugt mehr als 700 g.

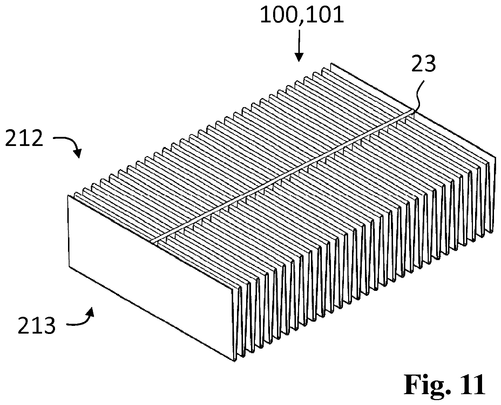

In Fig. 11 ist schließlich ein Detail eines Filterelements 100,101 gezeigt, das eine Mehrzahl Faltenstabilisierungsmittel 23 aufweist, die den Filterbalg stützen und in einem lateralen Abstand von nicht mehr als 150 mm zueinander vorliegen. Bei der Darstellung des Filterelements 100,101 handelt es sich um eine stark vereinfachte Darstellung, anhand derer jedoch das Konzept der Faltenabstützung durch die Faltenstabilisierungsmittel 23 erläutert werden kann.

Das Filterelement 100,101 weist auf seiner Reinseite 212 eine so genannte durchlaufende Kleberaupe 23 auf, die ein "inneres Faltenstabilisierungsmittel" im Sinne der Erfindung darstellt. Unter einer durchlaufenden Kleberaupe wird vorliegend eine Kleberaupe 23 verstanden, die bereits vor dem Falten auf das flächige Filtermedium aufgebracht wird und somit nach dem Falten komplett vom Faltengrund zur Faltenspitze verläuft, d. h. eben durchlaufend ausgebildet ist.

## Patentansprüche

1. Umgebungsluftreinigungsvorrichtung (1012, 1014, 1017, 1018) für ein Straßenfahrzeug (1), die insbesondere zur Entfernung von Stäuben, insbesondere Feinstaub, und/oder Gasen aus der Umgebungsluft ausgebildet ist, wobei die Umgebungsluftreinigungsvorrichtung (1012, 1014, 1017, 1018) zumindest ein Filterelement (100,101,1116) aufweist und in einem Außenbereich des Straßenfahrzeugs (1) anordenbar ist,
wobei die Umgebungsluftreinigungsvorrichtung (1012, 1014, 1017, 1018) zur Montage mittels einer Dachträgervorrichtung ausgebildet ist, wobei
die Umgebungsluftreinigungsvorrichtung (1012, 1014, 1017, 1018) eine Montagevorrichtung (1041) zur starren Kupplung mit einer fahrzeugseitigen Montageeinrichtung für Dachlasten aufweist, **gegekennzeichnet, durch**
- eine Montageöffnung (1122) für das Filterelement (100,101,1116), die seitlich, vertikal oder, bezogen auf eine bestimmungsgemäße Fahrtrichtung in einem Montagezustand, hinten angeordnet ist, wobei die Montageöffnung (1122) durch eine Wartungsklappe verschließbar ist, die einen Wechsel des Filterelements (1116) erlaubt und
- wobei die Umgebungsluftreinigungsvorrichtung (1012, 1014, 1017, 1018) dem zumindest einen Filterelement (100,101,1116) strömungsmäßig vorgeschaltet einen Wasserabscheider (1112, 1121) umfassend einen Lamellenabscheider und/oder eine hydrophobe Abscheidelage aufweist.

2. Umgebungsluftreinigungsvorrichtung (1012, 1014, 1017, 1018) nach Anspruch 1, **dadurch gekennzeichnet, dass** die Montagevorrichtung (1041) zumindest ein formschlüssiges und/oder kraftschlüssiges Befestigungselement, insbesondere ein Klemmelement, und/oder zumindest ein magnetisches Befestigungselement und/oder zumindest einen Saugnapf aufweist.

3. Umgebungsluftreinigungsvorrichtung (1012, 1014, 1017, 1018) nach der Anspruch 1 oder 2, **dadurch gekennzeichnet, dass** das zumindest eine Filterelement (100,101,1116) ein gefaltetes Filterelement (100,101) mit zumindest einem Filterbalg umfasst, wobei besonders bevorzugt die Faltenhöhe des Filterbalgs zumindest 100 mm beträgt.

4. Umgebungsluftreinigungsvorrichtung (1012, 1014, 1017, 1018) nach Anspruch 3, **dadurch gekennzeichnet, dass** das Filterelement (100,101,1116) eine Mehrzahl Faltenstabilisierungsmittel (23) aufweist, die den Filterbalg stützen und in einem lateralen Abstand von nicht mehr als 150 mm zueinander vorliegen.

5. Umgebungsluftreinigungsvorrichtung (1012, 1014, 1017, 1018) nach Anspruch 4, **dadurch gekennzeichnet, dass** die Faltenstabilisierungsmittel (23) jeweils parallel zueinander, bevorzugt in Faltenquerrichtung, verlaufen und/oder dass die Faltenstabilisierungsmittel (23) zumindest auf einer Reinluftseite (212) des Filterelements (100,101,1116), bevorzugt zusätzlich auf einer Rohluftseite (213) des Filterelements (100,101,1116), vorliegen.

6. Umgebungsluftreinigungsvorrichtung (1012, 1014, 1017, 1018) nach einem der vorhergehenden Ansprüche,
**dadurch gekennzeichnet, dass**
- die Umgebungsluftreinigungsvorrichtung (1012, 1014, 1017, 1018) zumindest ein Aufnahmegehäuse aufweist, in dem das zumindest eine Filterelement (100,101,1116) aufgenommen ist, das zumindest eine Eintrittsöffnung (1111) und eine Austrittsöffnung (1118) aufweist und das mittels der Montagevorrichtung (1041) mit der fahrzeugseitigen Montageeinrichtung für Dachlasten des Straßenfahrzeugs (1) verbindbar ist, und/oder
- die Umgebungsluftreinigungsvorrichtung (1012, 1014, 1017, 1018) zumindest zwei Filterelemente (100,101,1116) aufweist, die insbesondere in Fahrzeugquerrichtung oder Fahrzeughochrichtung nebeneinander angeordnet sind, insbesondere mit einem vorbestimmten Abstand dazwischen.

7. Umgebungsluftreinigungsvorrichtung (1012, 1014, 1017, 1018) nach einem der vorhergehenden Ansprüche, **dadurch gekennzeichnet, dass** die Umgebungsluftreinigungsvorrichtung (1012, 1014, 1017, 1018) zumindest ein Strömungsleitelement (1119) aufweist, das bevorzugt an einer vorderen, äußeren und in Fahrzeughochrichtung verlaufenden Seitenkante der Umgebungsluftreinigungsvorrichtung (1012, 1014, 1017, 1018) angeordnet ist und/oder an einer vorderen, in Fahrzeugquerrichtung verlaufenden unteren und/oder oberen Kante der Umgebungsluftreinigungsvorrichtung (1012, 1014, 1017, 1018).

8. Umgebungsluftreinigungsvorrichtung (1012, 1014, 1017, 1018) nach einem der vorhergehenden Ansprüche, **dadurch gekennzeichnet, dass** die Umgebungsluftreinigungsvorrichtung (1012, 1014, 1017, 1018) dem zumindest einen Filterelement strömungsmäßig vorgeschaltet einen Vor- bzw. Grobabscheider, insbesondere ein Abscheidegitter, ein Abscheidenetz, ein Prallblech und/oder ein Vorabscheidervlies, aufweist.

9. Umgebungsluftreinigungsvorrichtung (1012, 1014, 1017, 1018) nach einem der vorhergehenden Ansprüche, mit einem Schubladenmechanismus und/oder lösbaren Rastverbindungen für die Montage des Filterelements (100,101,1116).

10. Umgebungsluftreinigungsvorrichtung (1012, 1014, 1017, 1018) nach einem der vorhergehenden Ansprüche,
**dadurch gekennzeichnet, dass**
- das zumindest eine Filterelement (100,101,1116) eine Anströmfläche von zumindest 100 mm x 250 mm aufweist, bevorzugt zumindest 150 mm x 500 mm und/oder das Volumen des zumindest einen Filterelements (100,101,1116) zumindest 6,5 I beträgt, bevorzugt zumindest 15 I, und/oder
- die Netto-Filterfläche des zumindest einen Filterelements (100,101,1116) zumindest 3 m², bevorzugt zumindest 7 m², am meisten bevorzugt zumindest 15 m², beträgt.

11. Umgebungsluftreinigungsvorrichtung (1012, 1014, 1017, 1018) nach einem der vorhergehenden Ansprüche, **dadurch gekennzeichnet, dass** die Umgebungsluftreinigungsvorrichtung (1012, 1014, 1017, 1018) einen Druckverlust bei einer Anströmung des Filterelements (100,101,1116) mit Luft bei Normbedingungen mit 1,5 m/s von höchstens 200 Pa, bevorzugt bei 2,5 m/s von höchstens 250 Pa, aufweist.

12. Umgebungsluftreinigungsvorrichtung (1012, 1014, 1017, 1018) nach einem der vorhergehenden Ansprüche, umfassend eine Luftfördereinrichtung (1113) zur Unterstützung der Durchströmung, insbesondere zumindest einen Ventilator oder Gebläse (1113), die insbesondere ein elektrisches Anschlusselement aufweist, das mit einer Stromversorgung eines Straßenfahrzeugs (1) verbindbar ist.

13. Straßenfahrzeug (1), insbesondere Personenkraftwagen oder Lastkraftwagen, insbesondere leichter Lastkraftwagen, insbesondere angetrieben mit einer Brennkraftmaschine und/oder Elektroantrieb, das eine Umgebungsluftreinigungsvorrichtung aufweist, die insbesondere zur Entfernung von Stäuben, insbesondere Feinstaub, und/oder Gasen aus der Umgebungsluft ausgebildet ist, wobei die Umgebungsluftreinigungsvorrichtung zumindest ein Filterelement (100,101,1116) aufweist und in einem Außenbereich auf dem Dach des Straßenfahrzeugs (1) angeordnet ist, **dadurch gekennzeichnet, dass** die Umgebungsluftreinigungsvorrichtung eine Umgebungsluftreinigungsvorrichtung (1012, 1014, 1017, 1018) nach einem der Ansprüche 1 bis 12 ist, die mittels der Montagevorrichtung (1041) mit einer fahrzeugseitigen Montageeinrichtung für Dachlasten starr gekoppelt ist.

14. Straßenfahrzeug (1) nach Anspruch 13, **dadurch gekennzeichnet, dass** das zumindest eine Filterelement (100,101,1116) der Umgebungsluftreinigungsvorrichtung (1012, 1014, 1017, 1018) in Fahrzeuglängsrichtung und/oder zumindest teilweise in Fahrzeughochrichtung durchströmbar ist.

## Claims

1. Ambient air purification device (1012, 1014, 1017, 1018) for a road vehicle (1) in particular designed to remove dusts, in particular fine particulate matter, and/or gases from the ambient air, wherein the ambient air purification device (1012, 1014, 1017, 1018) features at least one filter element (100, 101, 1116) and can be disposed in an outer area of the road vehicle (1),
wherein the ambient air purification device (1012, 1014, 1017, 1018) is designed to be mounted using a roof rack device, wherein
the ambient air purification device (1012, 1014, 1017, 1018) features a mounting apparatus (1041) for rigid coupling with a vehicle-side mounting means for roof loads, **characterized by**
- a mounting opening (1122) for the filter element (100, 101, 1116) disposed laterally, vertically or, with respect to an intended direction of travel in a mounting state, at the rear, wherein the mounting opening (1122) is closable through a maintenance flap allowing replacement of the filter element (1116), and
- wherein the ambient air purification device (1012, 1014, 1017, 1018) features, fluidically upstream of the at least one filter element (100, 101, 1116), a water separator (1112, 1121) comprising a lamella separator and/or a hydrophobic separator layer.

2. Ambient air purification device (1012, 1014, 1017, 1018) according to claim 1, **characterized in that** the mounting apparatus (1041) features at least one positive and/or non-positive fastening element, in particular a clamping element, and/or at least one magnetic fastening element and/or at least one suction cup.

3. Ambient air purification device (1012, 1014, 1017, 1018) according to claim 1 or 2, **characterized in that** the at least one filter element (100, 101, 1116) comprises a folded filter element (100, 101) comprising at least one filter bellows, wherein particularly preferably the fold height of the filter bellows is at least 100 mm.

4. Ambient air purification device (1012, 1014, 1017, 1018) according to claim 3, **characterized in that** the filter element (100, 101, 1116) features a plurality of fold stabilizing means (23) supporting the filter bellows and being present at a lateral distance not exceeding 150 mm from one another.

5. Ambient air purification device (1012, 1014, 1017, 1018) according to claim 4, **characterized in that** the fold stabilizing means (23) each extend parallel to one another, preferably in the transverse direction of the folds, and/or **in that** the fold stabilizing means (23) are present at least on a clean air side (212) of the filter element (100, 101, 1116), preferably additionally on a raw air side (213) of the filter element (100, 101, 1116).

6. Ambient air purification device (1012, 1014, 1017, 1018) according to one of the preceding claims,
**characterized in that**
- the ambient air purification device (1012, 1014, 1017, 1018) features at least one receiving housing in which the at least one filter element (100, 101, 1116) is accommodated featuring at least one inlet opening (1111) and one outlet opening (1118) and which is connectable to the mounting means for roof loads of the road vehicle (1) on the vehicle side using the mounting apparatus (1041), and/or
- the ambient air purification device (1012, 1014, 1017, 1018) features at least two filter elements (100, 101, 1116) which are disposed adjacent to each other, in particular in vehicle transverse direction or vehicle vertical direction, in particular with a predetermined spacing therebetween.

7. Ambient air purification device (1012, 1014, 1017, 1018) according to one of the preceding claims, **characterized in that** the ambient air purification device (1012, 1014, 1017, 1018) features at least one flow guiding element (1119) disposed preferably at a front, outer lateral edge of the ambient air purification device (1012, 1014, 1017, 1018) and extending in the vehicle vertical direction and/or at a front, in the vehicle transverse direction extending lower and/or upper edge of the ambient air purification device (1012, 1014, 1017, 1018).

8. Ambient air purification device (1012, 1014, 1017, 1018) according to one of the preceding claims, **characterized in that** the ambient air purification device (1012, 1014, 1017, 1018) features a pre-separator or coarse separator fluidically upstream of the at least one filter element, in particular a separating grid, a separating net, a baffle plate and/or a pre-separator fleece.

9. Ambient air purification device (1012, 1014, 1017, 1018) according to one of the preceding claims, having a drawer mechanism and/or detachable latching connections for the assembly of the filter element (100, 101, 1116).

10. Ambient air purification device (1012, 1014, 1017, 1018) according to one of the preceding claims,
**characterized in that**
- the at least one filter element (100, 101, 1116) features an inflow surface of at least 100 mm x 250 mm, preferably at least 150 mm x 500 mm and/or the volume of the at least one filter element (100, 101, 1116) amounts to at least 6.5 l, preferably at least to 15 l, and/or
- the net filter area of the at least one filter element (100, 101, 1116) amounts to at least 3 m², preferably to at least 7 m², most preferably to at least 15 m².

11. Ambient air purification device (1012, 1014, 1017, 1018) according to one of the preceding claims, **characterized in that** the ambient air purification device (1012, 1014, 1017, 1018) features a pressure loss when air flows to the filter element (100, 101, 1116) at standard conditions at 1.5 m/s of at most 200 Pa, preferably at 2.5 m/s of at most 250 Pa.

12. Ambient air purification device (1012, 1014, 1017, 1018) according to one of the preceding claims, comprising an air-conveying device (1113) for supporting the throughflow, in particular at least one fan or blower (1113), which features in particular an electric connecting element which is connectable to a power supply of a road vehicle (1).

13. Road vehicle (1), in particular passenger car or truck, in particular light truck, in particular driven by an internal combustion engine and/or electric drive which features an ambient air purification device which is in particular designed to remove dusts, in particular fine particulate matter, and/or gases from the ambient air, wherein the ambient air purification device features at least one filter element (100, 101, 1116) and is disposed in an outer area on the roof of the road vehicle (1), **characterized in that** the ambient air purification device is an ambient air purification device (1012, 1014, 1017, 1018) according to one of the claims 1 to 12, which is rigidly coupled to a mounting means for roof loads on the vehicle side using the mounting apparatus (1041).

14. Road vehicle (1) according to claim 13, **characterized in that** the at least one filter element (100, 101, 1116) of the ambient air purification device (1012, 1014, 1017, 1018) can be flowed through in the vehicle longitudinal direction and/or at least partially perpendicularly to it, in particular in the vehicle vertical direction.

## Revendications

1. Dispositif de purification de l'air ambiant (1012, 1014, 1017, 1018) pour un véhicule routier (1) qui est conçu notamment pour éliminer des poussières, notamment des poussières fines, et/ou des gaz de l'air ambiant, dans lequel le dispositif de purification de l'air ambiant (1012, 1014, 1017, 1018) présente au moins un élément filtrant (100, 101, 1116) et peut être disposé dans une zone extérieure du véhicule routier (1),
dans lequel le dispositif de purification de l'air ambiant (1012, 1014, 1017, 1018) est conçu pour être monté au moyen d'une galerie porte-bagages, dans lequel
le dispositif de purification de l'air ambiant (1012, 1014, 1017, 1018) présente un dispositif de montage (1041), côté véhicule, pour un couplage rigide à une installation de montage pour charges de toiture, **caractérisé par**
- une ouverture de montage (1122) pour l'élément filtrant (100, 101, 1116), qui est disposée latéralement, verticalement ou, par rapport à un sens de la marche conforme à la destination dans un état de montage, à l'arrière, dans lequel l'ouverture de montage (1122) peut être obturé par une trappe de service permettant de remplacer l'élément filtrant (1116) et
- dans lequel le dispositif de purification de l'air ambiant (1012, 1014, 1017, 1018) présente, placé fluidiquement en amont de l'élément filtrant (100, 101, 1116), au moins au nombre d'un, un séparateur d'eau (1112, 1121) comprenant un séparateur à lamelles et/ou une couche de séparation hydrophobe.

2. Dispositif de purification de l'air ambiant (1012, 1014, 1017, 1018) selon la revendication 1, **caractérisé en ce que** le dispositif de montage (1041) présente au moins un élément de fixation par engagement positif et/ou par adhérence, notamment un élément de serrage, et/ou au moins un élément de fixation magnétique et/ou au moins une ventouse.

3. Dispositif de purification de l'air ambiant (1012, 1014, 1017, 1018) selon la revendication 1 ou 2, **caractérisé en ce que** l'élément filtrant (100, 101, 1116), au moins au nombre d'un, comprend un élément filtrant plié (100, 101) comprenant au moins un soufflet de filtre, de façon particulièrement préférée la hauteur de pliage du soufflet de filtre est de 100 mm au moins.

4. Dispositif de purification de l'air ambiant (1012, 1014, 1017, 1018) selon la revendication 3, **caractérisé en ce que** l'élément filtrant (100, 101, 1116) présente une pluralité de moyens de stabilisation des plis (23) supportant le soufflet de filtre et se trouvant à une distance latérale les uns des autres qui n'est pas supérieure à 150 mm.

5. Dispositif de purification de l'air ambiant (1012, 1014, 1017, 1018) selon la revendication 4, **caractérisé en ce que** les moyens de stabilisation des plis (23) s'étendent respectivement parallèlement les uns aux autres, de préférence dans la direction transversale de plis, et/ou **en ce que** les moyens de stabilisation des plis (23) se trouvent au moins sur un côté de l'air pur (212) de l'élément filtrant (100, 101, 1116), de préférence en outre sur un côté de l'air brut (213) de l'élément filtrant (100, 101, 1116).

6. Dispositif de purification de l'air ambiant (1012, 1014, 1017, 1018) selon l'une quelconque des revendications précédentes,
**caractérisé en ce que**
- le dispositif de purification de l'air ambiant (1012, 1014, 1017, 1018) présente au moins un boîtier de logement dans lequel est logé l'élément filtrant (100, 101, 1116), au moins au nombre d'un, qui présente au moins une ouverture d'entrée (1111) et une ouverture de sortie (1118) et qui peut être relié au moyen du dispositif de montage (1041) à l'installation de montage, côté véhicule, pour charges de toiture du véhicule routier (1), et/ou
- le dispositif de purification de l'air ambiant (1012, 1014, 1017, 1018) présente au moins deux éléments filtrants (100, 101, 1116) juxtaposés, notamment en direction transversale du véhicule ou en direction verticale du véhicule, notamment avec un espacement prédéterminé entre eux.

7. Dispositif de purification de l'air ambiant (1012, 1014, 1017, 1018) selon l'une quelconque des revendications précédentes, **caractérisé en ce que** le dispositif de purification de l'air ambiant (1012, 1014, 1017, 1018) présente au moins un élément de guidage du flux (1119) qui est disposé de préférence sur une arête latérale avant, extérieure du dispositif de purification de l'air ambiant (1012, 1014, 1017, 1018) et s'étendant dans la direction verticale du véhicule et/ou sur une arête inférieure et/ou supérieure avant, s'étendant dans la direction transversale du véhicule, du dispositif de purification de l'air ambiant (1012, 1014, 1017, 1018).

8. Dispositif de purification de l'air ambiant (1012, 1014, 1017, 1018) selon l'une quelconque des revendications précédentes, **caractérisé en ce que** le dispositif de purification de l'air ambiant (1012, 1014, 1017, 1018) présente, placé fluidiquement en amont de l'élément filtrant, au moins au nombre d'un, un pré-séparateur ou séparateur grossier, notamment une grille de séparation, un filet de séparation, une tôle de chicane et/ou un non-tissé du pré-séparateur.

9. Dispositif de purification de l'air ambiant (1012, 1014, 1017, 1018) selon l'une quelconque des revendications précédentes, ayant un mécanisme à tiroirs et/ou des liaisons par encliquetage pour le montage de l'élément filtrant (100, 101, 1116).

10. Dispositif de purification de l'air ambiant (1012, 1014, 1017, 1018) selon l'une quelconque des revendications précédentes,
**caractérisé en ce que**
- l'élément filtrant (100, 101, 1116), au moins au nombre d'un, présente une surface d'afflux de 100 mm x 250 mm au moins, de préférence au moins 150 mm x 500 mm et/ou le volume de l'élément filtrant (100, 101, 1116), au moins au nombre d'un, est au moins 6,5 l, de préférence au moins 15 l, et/ou
- la surface filtrante nette de l'élément filtrant (100, 101, 1116), au moins au nombre d'un, est au moins 3 m², de préférence au moins 7 m², le plus préférablement au moins 15 m².

11. Dispositif de purification de l'air ambiant (1012, 1014, 1017, 1018) selon l'une quelconque des revendications précédentes, **caractérisé en ce que** le dispositif de purification de l'air ambiant (1012, 1014, 1017, 1018) présente une perte de pression lors de l'entrée du flux d'air dans l'élément filtrant (100, 101, 1116) dans des conditions standard avec 1,5 m/s ne dépassant pas 200 Pa, de préférence avec 2,5 m/s ne dépassant pas 250 Pa.

12. Dispositif de purification de l'air ambiant (1012, 1014, 1017, 1018) selon l'une quelconque des revendications précédentes, comprenant un convoyeur d'air (1113) pour soutenir le flux, notamment au moins un ventilateur ou une soufflante (1113) et qui présente notamment un élément de raccordement électrique connectable à l'alimentation en courant d'un véhicule routier (1).

13. Véhicule routier (1), notamment véhicule automobile ou camion, notamment camion léger, notamment entraîné par un moteur à combustion interne et/ou entraînement électrique qui présente un dispositif de purification de l'air ambiant conçu notamment pour éliminer des poussières, notamment des poussières fines, et/ou des gaz de l'air ambiant, dans lequel le dispositif de purification de l'air ambiant présente au moins un élément filtrant (100, 101, 1116) et est disposé dans une zone extérieure sur le toit du véhicule routier (1), **caractérisé en ce que** le dispositif de purification de l'air ambiant est un dispositif de purification de l'air ambiant (1012, 1014, 1017, 1018) selon l'une quelconque des revendications 1 à 12, qui est couplé de manière rigide, au moyen du dispositif de montage (1041), à l'installation de montage, côté véhicule, pour charges de toiture.

14. Véhicule routier (1) selon la revendication 13, **caractérisé en ce que** l'élément filtrant (100, 101, 1116), au moins au nombre d'un, du dispositif de purification de l'air ambiant (1012, 1014, 1017, 1018) peut être parcouru en direction longitudinale du véhicule et/ou au moins partiellement en direction verticale du véhicule.
